# DEMANDE DE BREVET EUROPEEN

(11) **EP 4 113 750 A1**
(43) Date de publication de la demande: **04.01.2023**
(21) Numéro de dépôt: 21305923.1
(22) Date de dépôt: 02.07.2021
(51) Int. Cl.: H01R 9/26, H01R 13/631, H02B 1/00

(54) **DISPOSITIF DE CONNEXION POUR RACCORDER UN APPAREIL ÉLECTRIQUE À UNE BARRE DE DISTRIBUTION D ÉLECTRICITÉ, ENSEMBLE COMPORTANT UN TEL DISPOSITIF DE CONNEXION ET UN TEL APPAREIL ÉLECTRIQUE**

(71) Demandeur: Schneider Electric Industries SAS, 92500 Rueil-Malmaison (FR)
(72) Inventeur: Cervellin, Lucas, 38760 VARCES (FR); Christoud, Julien, 38000 GRENOBLE (FR)
(74) Mandataire: Lavoix

(57) **Abrégé**

Ce dispositif de connexion (4) pour connecter un appareil électrique (2) à une barre de distribution électrique (6), comportant au moins un connecteur électrique (32) et un boîtier (30) configuré pour être attaché mécaniquement à un point de montage d'une barre de distribution et à l'appareil électrique,
dans lequel chaque connecteur électrique (32) comporte une première patte de connexion configurée pour coopérer avec un terminal de raccordement (12) de l'appareil, et une deuxième patte de connexion (50) configurée pour coopérer avec un terminal de raccordement (26) de la barre de distribution,
chaque connecteur électrique (32) comportant en outre une portion intermédiaire qui comporte une portion coudée en forme en U élastiquement déformable et ouverte vers la deuxième patte de connexion.

## Description

### DOMAINE TECHNIQUE

La présente invention se rapporte au domaine de la distribution d'électricité et concerne un dispositif de connexion pour raccorder un appareil électrique à une barre de distribution d'électricité. L'invention concerne également un ensemble comportant un tel dispositif de connexion et un tel appareil électrique, le dispositif de connexion étant associé ou intégré à l'appareil électrique.

### ETAT DE LA TECHNIQUE ANTERIEURE

De nombreux appareils électriques utilisés dans des installations de distribution d'électricité, tels que des appareils de protection électrique, comme des disjoncteurs, mais aussi des appareils de commutation ou des appareils de mesure, et bien d'autres exemples encore, sont configurés pour être associés à une barre de distribution d'électricité, cette dernière étant parfois aussi appelée peigne de distribution.

La barre de distribution comporte une armature qui entoure et protège les éléments électriquement conducteurs et dans laquelle sont ménagées des encoches qui permettent de fixer mécaniquement l'appareil électrique sur l'armature. Des fentes ménagées dans l'armature donnent accès aux éléments électriquement conducteurs pour permettre une connexion électrique entre l'appareil électrique et les éléments électriquement conducteurs.

Cette connexion électrique est assurée grâce à un dispositif de connexion qui est connecté à l'appareil électrique et qui comporte des connecteurs, tels que des lames métalliques. Les connecteurs du dispositif de connexion sont destinés à être insérées dans les fentes ménagées dans l'armature de la barre de distribution pour entrer en contact avec les éléments électriquement conducteurs lorsque l'appareil électrique est monté sur la barre de distribution.

Le brevet EP 1 424 756 B1 décrit un exemple d'un dispositif de connexion utilisé pour raccorder un appareil électrique, tel qu'un disjoncteur, à un peigne de distribution. Pour monter l'appareil électrique sur le peigne de distribution, l'appareil électrique est engagé dans le peigne de distribution avec un mouvement de pivotement autour d'un axe de pivotement qui s'étend parallèlement à la longueur du peigne de distribution.

Un problème fréquemment rencontré est que les connecteurs du dispositif de connexion peuvent se trouver mal alignées par rapport aux fentes ménagées dans la barre de distribution. Ce problème peut, par exemple, être causé par des variations inhérentes au processus de fabrication. Ce désalignement peut rendre l'appareil électrique plus difficile à connecter à la barre de distribution, voire même empêcher la connexion, ce qui n'est pas souhaitable.

Il existe donc un besoin pour un dispositif de connexion pour un appareil électrique dans lequel le dispositif de connexion peut être connecté facilement à une barre de distribution électrique, même lorsque les connecteurs du dispositif de connexion peuvent se trouver mal alignés par rapport aux fentes ménagées dans la barre de distribution.

### EXPOSE DE L'INVENTION

A cet effet, un aspect de l'invention concerne dispositif de connexion pour connecter un appareil électrique à une barre de distribution électrique, la barre de distribution comportant une armature comprenant au moins un point de montage pour accrocher l'appareil électrique, la barre de distribution comprenant des terminaux électriques de raccordement étant accessibles au travers d'une ouverture ménagée dans l'armature,
le dispositif de connexion comportant au moins un connecteur électrique et un boîtier, chaque connecteur électrique étant solidaire du boîtier, le boîtier étant configuré pour être attaché mécaniquement au point de montage et à l'appareil électrique,
chaque connecteur électrique étant configuré pour être raccordé à un terminal électrique de raccordement de la barre de distribution lorsque le dispositif de connexion est attaché mécaniquement au point de montage,
dans lequel chaque connecteur électrique comporte, à une première extrémité, une première patte de connexion configurée pour coopérer avec un terminal de raccordement de l'appareil électrique et, à une deuxième extrémité, une deuxième patte de connexion configurée pour coopérer avec des terminaux de raccordement de la barre de distribution,
chaque connecteur électrique comportant en outre une portion intermédiaire qui relie la première patte de connexion à la deuxième patte de connexion,
dans lequel la portion intermédiaire de chaque connecteur comporte une portion coudée en forme en U élastiquement déformable, la portion coudée en forme de U étant ouverte vers la deuxième patte de connexion.

Grâce à l'invention, les connecteurs du dispositif de connexion peuvent se déplacer avec un débattement latéral, grâce à la forme spécifique des connecteurs et notamment grâce à la forme en U de la portion coudée.

Ce débattement latéral facilite l'insertion de l'appareil électrique dans la barre de distribution et permet de compenser tout écart aux tolérances liés à des variabilités du procédé de fabrication, tout en conservant des connecteurs simples à fabriquer et sans augmenter significativement la taille ni l'encombrement des connecteurs.

Selon des aspects avantageux mais non obligatoires, un tel dispositif de connexion peut incorporer une ou plusieurs des caractéristiques suivantes, prises isolément ou suivant toute combinaison techniquement admissible :
- la portion intermédiaire de chaque connecteur comporte en outre une partie avec une section en forme de L qui s'inscrit dans le prolongement d'une des branches de la portion coudée en forme de U.
- la section en forme de L de la partie de la portion intermédiaire est au moins en partie formée par une partie en forme de plaque plane qui s'étend essentiellement perpendiculairement par rapport aux parties immédiatement voisines de la portion intermédiaire auxquelles elle est reliée directement.
- la partie avec une section en forme de L est prolongée, vers la deuxième patte de connexion, par une portion coudée additionnelle qui forme un angle essentiellement égal à 90°.
- le connecteur est réalisé dans un matériau électriquement conducteur, tel qu'un métal ou un alliage métallique.
- le boîtier du dispositif de connexion comporte, sur sa face intérieure, des rainures qui reçoivent au moins une partie des connecteurs électriques.
- le boîtier du dispositif de connexion comporte, sur sa face intérieure, des doigts de fixation qui sont configurés pour coopérer avec des éléments de fixation complémentaires ménagés sur le boîtier de l'appareil électrique.
- les doigts de fixation sont déformables et comportent chacun, à leur extrémité, un crochet configuré pour s'attacher par coopération de forme, notamment par encliquetage, avec un des éléments de fixation complémentaires ménagés sur le boîtier de l'appareil électrique, l'élément de fixation complémentaire ménagé sur le boîtier de l'appareil électrique comportant un orifice ou un rebord.

Selon un autre aspect, l'invention concerne un appareil électrique et un dispositif de connexion selon l'une quelconque des revendications précédentes, dans lequel les connecteurs du dispositif de connexion sont raccordés aux terminaux de raccordement de l'appareil électrique.

Selon un aspect de l'invention, le dispositif de connexion est monté sur l'appareil électrique.

Selon un aspect de l'invention, le dispositif de connexion est intégré à l'appareil électrique.

### BREVE DESCRIPTION DES FIGURES

L'invention sera mieux comprise et d'autres avantages de celle-ci apparaîtront plus clairement à la lumière de la description qui va suivre d'un mode de réalisation d'un dispositif de connexion et d'un appareil électrique donnée uniquement à titre d'exemple et faite en référence aux dessins annexés, dans lesquels :
- la figure 1 représente schématiquement un appareil électrique comportant un dispositif de connexion conforme à des modes de réalisation de l'invention, l'appareil électrique étant illustré connecté à une barre de distribution d'électrique ;
- la figure 2 représente schématiquement une face supérieure de l'appareil électrique de la figure 1, dans laquelle des connecteurs électriques du dispositif de connexion de la figure 1 sont montrés raccordés à l'appareil électrique ;
- la figure 3 représente schématiquement un exemple du dispositif de connexion de la figure 1 selon une vue de l'extérieur ;
- la figure 4 représente schématiquement un exemple du dispositif de connexion de la figure 1 selon une vue de l'intérieur ;
- la figure 5 représente schématiquement le dispositif de connexion et l'appareil électrique de la figure 1 selon une vue en coupe dans le plan de coupe V de la figure 1.

### DESCRIPTION DETAILLEE D'UN MODE DE REALISATION

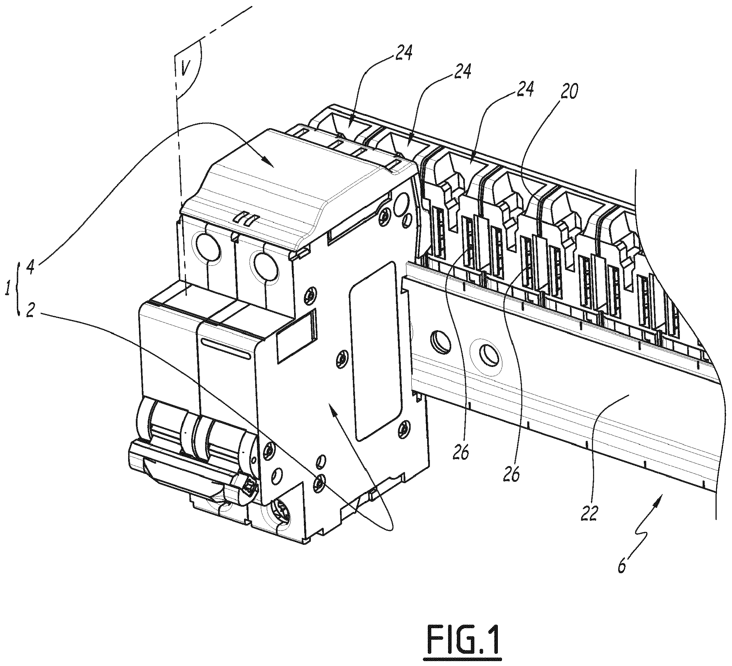

La figure 1 représente un ensemble 1 comportant un appareil électrique 2, un dispositif de connexion 4 et une barre de distribution électrique 6.

Dans l'exemple illustré, l'appareil 2 est monté sur la barre de distribution 6 et est raccordé électriquement à la barre de distribution 6 par l'intermédiaire du dispositif de connexion 4.

Dans de nombreux modes de réalisation, l'appareil 2 est un appareil de protection électrique, tel qu'un disjoncteur. Dans d'autres exemples, l'appareil 2 pourrait être un appareil de commutation, tel qu'un contacteur ou un relais, ou un appareil de mesure, ou un appareil de commande, et bien d'autres exemples encore.

L'appareil 2 comporte un boîtier 10, de préférence en forme de pavé sensiblement rectangulaire, le boîtier 10 comportant, entre autres, une face supérieure, une face avant et une face arrière.

Dans cet exemple, les qualificatifs « supérieur », « avant », et ainsi de suite sont définis par rapport à la position de l'appareil 2 lorsque l'appareil 2 est monté sur la barre de distribution 6.

Par exemple, la face avant comporte un levier de commande ou un indicateur visuel ou tout élément permettant une interaction entre l'appareil 2 et un utilisateur.

Le boîtier 10 est de préférence réalisé en un matériau isolant, tel que du plastique moulé.

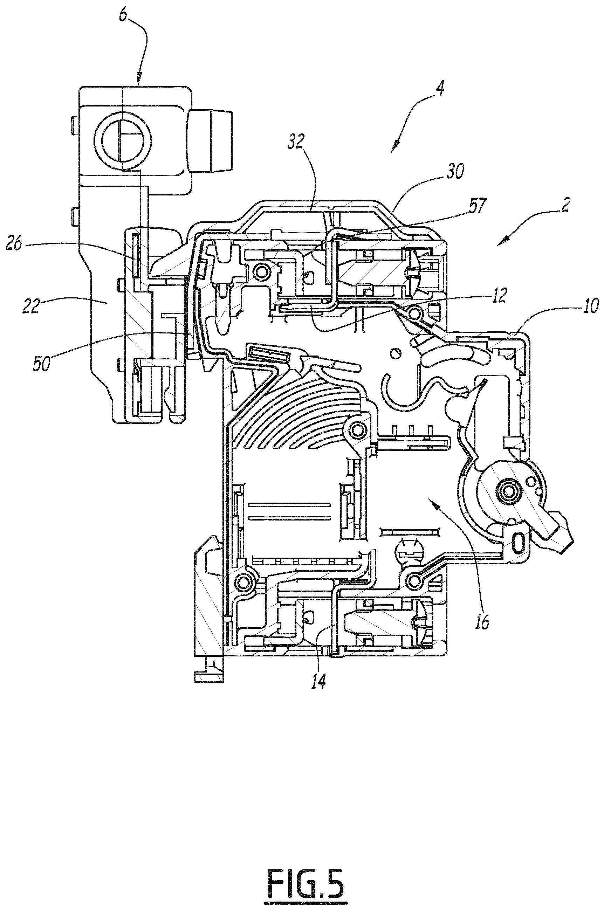

Comme montré sur la vue en coupe transversale de la figure 5, l'appareil 2 comporte des terminaux de raccordement internes 12 et 14.

Dans l'exemple illustré, le terminal 12 est destiné à être raccordé électriquement à un conducteur électrique logé dans la barre de distribution 6, ce conducteur pouvant, par exemple, être raccordé à une source d'énergie électrique. Le terminal 14, ici placé sur une partie inférieure de l'appareil 2, est quant à lui destiné à être raccordé à un autre appareil situé en aval de l'appareil 2.

En pratique, l'appareil 2 peut dans certains modes de réalisation comporter plusieurs terminaux analogues au terminal 12, par exemple dans le cas où l'appareil 2 est un appareil polyphasé, tel qu'un appareil triphasé. Il peut alors y avoir un terminal 12 par phase (et/ou par ligne de neutre).

Dans le cas où l'appareil 2 est un appareil de commutation ou un appareil de protection, l'appareil 2 peut comporter un mécanisme 16, tel qu'un système de contacts électriques séparables connecté entre les terminaux 12 et 14 et étant associé à un mécanisme de commutation pouvant être déclenché par un déclencheur et/ou par un levier de commande situé sur une face avant de l'appareil 2.

Comme visible sur les figures 1 et 5, la barre de distribution 6 comporte une armature 20, par exemple formée par une structure en matière plastique.

L'armature 20 présente ici une forme allongée s'étendant selon une direction longitudinale, qui peut être disposée à l'horizontale. En pratique, l'armature 6 peut être fixée sur un mur ou sur un tableau électrique, ces derniers comportant généralement une surface de fixation orientée verticalement.

L'armature 20 comporte une portion 22 de raccordement, tel qu'un rail de fixation qui s'étend longitudinalement avec l'armature 20, l'appareil 2 pouvant être accroché par sa face arrière sur la portion de raccordement 22.

Par exemple, la face arrière de l'appareil 2 peut comporter des éléments de fixation, tel qu'une mâchoire ou des crochets de fixation, ou tout moyen approprié.

La barre de distribution 6 comporte un ou plusieurs points de montage 24, formés sur l'armature 20, qui permettent d'accrocher l'appareil (et plus précisément pour accrocher le dispositif de fixation 4) avec la barre de raccordement 6.

Par exemple, l'appareil 2 est destiné à être monté sur la barre 6 par un mouvement de pivotement : d'abord l'appareil 2 est associé avec un point de montage 24, ce dernier coopérant avec le dispositif de connexion 4 qui est monté sur l'appareil 2, puis l'appareil 2 est pivoté selon une direction de rotation parallèle ou alignée avec la direction longitudinale de l'armature 20, et ensuite les éléments de fixation présents sur la face arrière de l'appareil 2 sont engagés avec la portion de raccordement 22.

A l'intérieur de l'armature, la barre 6 comporte au moins un conducteur électrique, telle qu'un barreau métallique servant à distribuer l'électricité. Pour accéder et se raccorder à ce conducteur électrique, la barre 6 comprend des terminaux électriques de raccordement 26 qui sont par exemple accessibles chacun au travers d'une ouverture, telle qu'une fente, ménagée dans l'armature, la fente étant de préférence ménagée au niveau de chaque point de montage 24.

Ainsi, lorsque l'appareil 2 est connecté mécaniquement à la barre 6, le terminal 12 de l'appareil 2 est raccordé au conducteur de la barre 6, par l'intermédiaire du dispositif de connexion 4.

La connexion électrique avec les terminaux électriques de raccordement 26 se fait ici en insérant des connecteurs électriques (les connecteurs électriques 32 du dispositif de connexion 4 décrit ci-après) dans les ouvertures, ces connecteurs électriques s'étendant alors perpendiculairement ou essentiellement perpendiculairement avec la direction longitudinale de la barre de distribution 6.

Ainsi, le dispositif de connexion a une fonction de raccordement électrique, mais aussi, de préférence, une fonction de connexion mécanique.

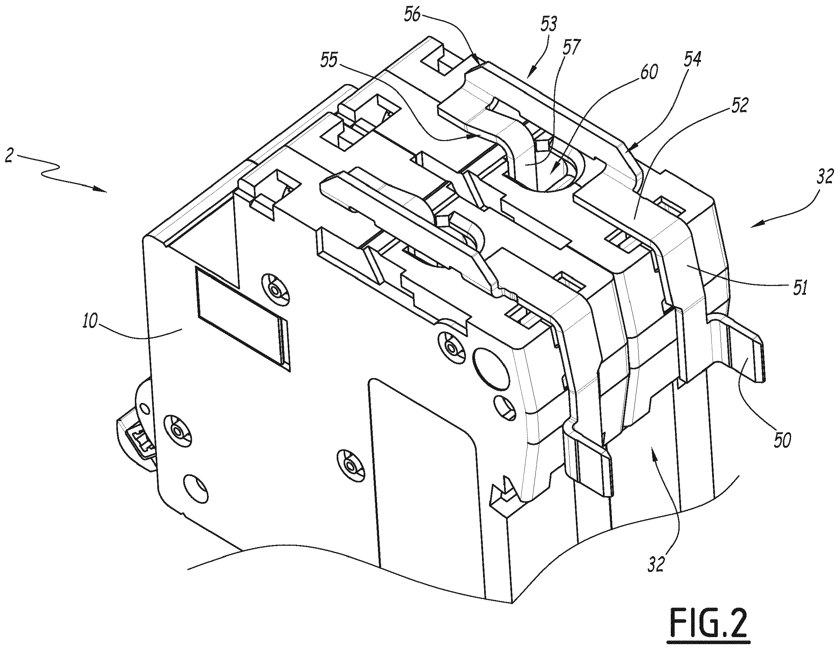

Le dispositif de connexion 4 est représenté plus en détail sur les figures 2, 3 et 4, et est au moins partiellement visible sur les figures 1 et 5.

Le dispositif de connexion 4 comporte un boîtier 30 et au moins un connecteur électrique 32.

Dans l'exemple illustré, le dispositif de connexion 4 comporte deux connecteurs électriques 32. Par exemple, l'appareil 2 est un appareil monophasé avec une ligne de neutre. L'un des connecteurs 32 du dispositif de connexion 4 est ainsi associé à la phase et l'autre connecteur 32 est associé au neutre. D'autres configurations sont bien évidemment possibles, en fonction de la nature de l'appareil 2 et du nombre de phases et du nombre de terminaux 12.

Le boîtier 30 est configuré pour être attaché mécaniquement à au moins un point de montage 24 (voire à deux, comme illustré sur la figure 1, ou plus selon les dimensions de l'appareil 2) et à l'appareil 2.

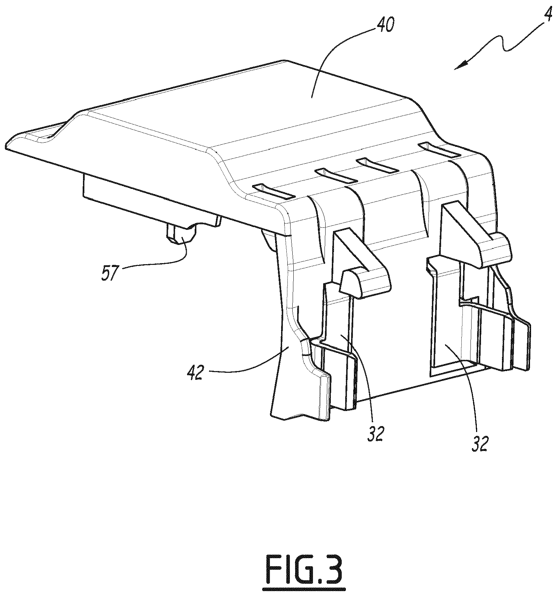

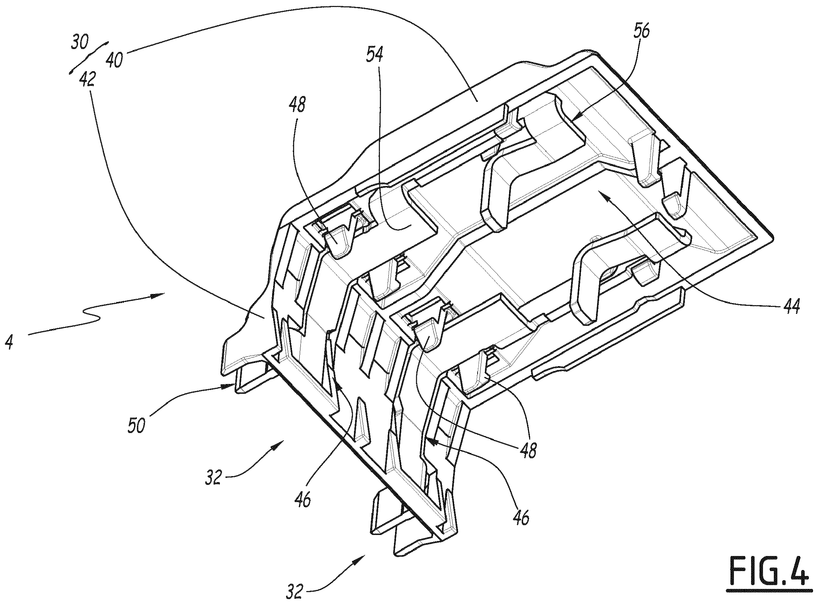

Dans de nombreux modes de réalisation, le boîtier 30 comporte, comme bien visible sur la figure 3 et sur la figure 4, une première partie 40 et une deuxième partie 42, de préférence ayant chacune une forme plate ou essentiellement plate, telle qu'une plaque, les parties 42 et 40 étant agencées avec un angle essentiellement égal à 90°, voire égal à 90°.

Par exemple, le boîtier 30 est configuré pour être reçu sur une face supérieure du boîtier 10 de l'appareil 2, en recouvrant au moins en partie la face supérieure et la face arrière de l'appareil 2, à la manière d'un couvercle.

Selon un exemple, la première partie 40 de boîtier est destinée à recouvrir la partie supérieure de l'appareil 2, tandis que la deuxième partie 42 de boîtier est destinée à recouvrir au moins en partie la face arrière de l'appareil 2.

Ainsi, le boîtier 30 présente une forme qui épouse au moins en partie la forme du boîtier 10.

Le boîtier 30 est par exemple réalisé dans un matériau électriquement isolant, tel que du plastique moulé.

Dans certains modes de réalisation, la première partie 40 de boîtier comporte une portion 44 bombée vers l'extérieur et qui délimite un logement 44 du côté intérieur du boîtier 30.

Par exemple, la figure 4 représente le boîtier 30 vu depuis son côté intérieur.

Les faces intérieures des parties 40 et 42 du boîtier sont destinées à venir en contact avec les faces supérieure et arrière, respectivement, du boîtier 10 de l'appareil 2 lorsque le dispositif de connexion 4 est monté sur l'appareil 2.

Avantageusement, le boîtier 30 comporte, notamment sur sa partie 42, des rainures 46, ou échancrures, qui sont ménagées sur la face intérieure de la partie 42, c'est-à-dire du côté intérieur du boîtier 30.

Les rainures 46 définissent des logements qui permettent d'accueillir, au moins en partie, le ou les connecteurs 32. Les rainures 46 permettent aussi de maintenir les connecteurs 32 en position. Les rainures 46 peuvent également contribuer à isoler électriquement les connecteurs 32, notamment en les maintenant à une distance suffisante les uns des autres, voire en formant des cloisons de séparations qui isolent au moins partiellement les connecteurs 32 les uns des autres.

De façon avantageuse, comme illustré sur la figure 4, le boîtier 30 comprend, sur sa face intérieure, des doigts de fixation 48 qui sont configurés pour coopérer avec des éléments de fixation complémentaires ménagés sur le boîtier 10 de l'appareil électrique 2.

De préférence, les doigts de fixation 48 sont placés sur la partie 40 et s'étendent en saillie perpendiculairement ou essentiellement perpendiculairement à la face intérieure de la partie 40.

Par exemple, les doigts de fixation 48 sont déformables, notamment élastiquement déformables, et comportent chacun, à leur extrémité, un crochet configuré pour s'attacher par coopération de forme, notamment par encliquetage, avec un des éléments de fixation complémentaires ménagés sur le boîtier 10 de l'appareil électrique.

Par exemple, chaque élément de fixation complémentaire ménagé sur le boîtier 10 de l'appareil électrique comporte un orifice ou un rebord. De tels orifices sont visibles sur l'exemple de la figure 2 montrant la face supérieure du boîtier 10 de l'appareil 2.

Les connecteurs 32 sont plus particulièrement visibles sur les figures 2, 3 et 4.

De préférence, chaque connecteur électrique 32 est solidaire du boîtier 30 du dispositif de connexion 4. Dans l'exemple de la figure 2, les connecteurs 32 sont illustrés sans le boîtier 30 uniquement à des fins d'illustration.

Chaque connecteur électrique 32 est configuré pour être raccordé à un terminal électrique de raccordement 26 de la barre de distribution lorsque le dispositif de connexion est attaché mécaniquement à la barre de distribution (à un ou à plusieurs points de montage 24).

Dans de nombreux modes de réalisation, le ou chaque connecteur 32 est réalisé dans un matériau électriquement conducteur, tel qu'un métal ou un alliage métallique.

De préférence, les connecteurs 32 ont une forme similaire, voire identique ou analogue.

Par exemple, les deux connecteurs 32 du mode de réalisation illustré sur les figures sont ici de forme similaire ou identique mais symétriques par rapport à un plan de symétrie médian du dispositif de connexion 4, ce plan de symétrie étant disposé parallèlement au plan de coupe V visible sur la figure 1.

On comprend que le nombre et la forme générale des connecteurs 32 dépendent de la forme de l'appareil 2 et notamment du nombre et de la disposition des terminaux 12.

De préférence, les connecteurs 32 sont chacun réalisés d'un seul tenant, par exemple une pièce mécanique fabriquée par moulage, ou par découpe puis pliage, ou par tout procédé de fabrication approprié.

Chaque connecteur électrique 32 comporte, à une première extrémité, une première patte de connexion 57 (figures 3, 4 et 5) configurée pour coopérer avec un terminal de raccordement 12 de l'appareil électrique 2 et, à une deuxième extrémité, une deuxième patte de connexion 50 (figures 2, 4 et 5) configurée pour coopérer avec un des terminaux de raccordement 26 de la barre de distribution 6.

Plus précisément, lorsque l'appareil 2 est monté sur la barre 6, chaque deuxième patte de connexion 50 est en contact direct avec un des terminaux de raccordement 26 de la barre de distribution 6. Lorsque le dispositif de connexion 4 est monté sur l'appareil 2, chaque première patte de connexion 57 est en contact direct avec un terminal de raccordement 12 de l'appareil électrique 2.

Chaque connecteur électrique 32 comporte en outre une portion intermédiaire, ici formée par les parties 51 à 56, qui relie la première patte de connexion 57 à la deuxième patte de connexion 50.

Comme bien visible sur la figure 2, la portion intermédiaire de chaque connecteur comporte une portion coudée 56 en forme en U qui est élastiquement déformable. La portion coudée en forme de U est ouverte vers la deuxième patte de connexion 50.

Par exemple, la barre de la portion coudée en forme de U qui relie les deux branches du « U » est tournée vers l'avant de l'appareil 2, tandis que le creux du « U » est tourné vers l'arrière de l'appareil 2.

Grâce à l'invention, les connecteurs 32 du dispositif de connexion 4 peuvent se déplacer avec un débattement latéral, grâce à la forme spécifique des connecteurs et notamment grâce à la forme en U de la portion coudée.

Ce débattement latéral facilite l'insertion de l'appareil électrique dans la barre de distribution et permet de compenser tout écart aux tolérances liés à des variabilités du procédé de fabrication, tout en conservant des connecteurs simples à fabriquer et sans augmenter significativement la taille ni l'encombrement des connecteurs.

En effet, la portion coudée 56 autorise un débattement latéral de la deuxième patte de connexion 50, c'est-à-dire qu'elle autorise un déplacement élastiquement réversible de la deuxième patte de connexion 50 par rapport à la première patte de connexion 57 (qui, elle, est maintenue en position fixe par son contact avec le terminal 12 lorsque le dispositif de connexion 4 est monté sur l'appareil 2), le déplacement pouvant se faire selon la direction longitudinale de la barre de distribution 6.

Ce déplacement latéral permet donc d'ajuster facilement la position des deuxièmes pattes de connexion 50 au moment de leur insertion dans la barre de distribution 6, ce qui permet de compenser un éventuel désalignement des deuxièmes pattes de connexion 50 par rapport aux ouvertures formées dans la barre de distribution 6 et donnant accès aux terminaux de raccordement 26.

En particulier, la forme optimisée des connecteurs 32 est étudiée pour ne pas dégrader les performances thermiques de l'appareil 2 et permet ainsi d'éviter l'apparition de points chauds dans l'appareil 2 lorsqu'un courant électrique circule dans les connecteurs 32.

Cette optimisation de la forme et des dimensions des connecteurs 32 permet également de limiter la quantité de matière requise pour fabriquer les connecteurs 32, ce qui rend les connecteurs 32 moins coûteux à fabriquer et moins compliqués à stocker et à fabriquer (par comparaison avec des connecteurs qui seraient composés d'un assemblage de plusieurs pièces mécaniques séparées et pouvant être articulées par un ressort).

De façon particulièrement avantageuse, la portion intermédiaire de chaque connecteur 32 comporte en outre une partie 54 avec une section en forme de « L » qui s'inscrit dans le prolongement d'une des branches de la portion coudée en forme de U.

La section en forme de « L » de la partie 54 est au moins en partie formée par est obtenue grâce à une partie en forme de plaque 53, notamment visible sur les figures 4 et 5, qui est ici disposée verticalement, par exemple de façon à former la partie verticale du « L ».

Cette partie 53 en forme de plaque plane s'étend perpendiculairement ou essentiellement perpendiculairement ou substantiellement perpendiculairement par rapport aux parties immédiatement voisines de la portion intermédiaire auxquelles elle est reliée directement.

Par exemple, comme cela sera décrit plus en détail ci-après, la partie en forme de plaque 53 est essentiellement plane et a sa plus grande surface disposée parallèlement aux faces latérales du dispositif 4 et de l'appareil 2 lorsque le dispositif 4 est monté sur l'appareil 2.

La partie 54 avec une section en forme de « L » est prolongée, vers la deuxième patte de connexion, par une portion coudée additionnelle 52 qui forme un angle essentiellement égal à 90°, voire égal à 90°.

La partie 54 avec une section en forme de « L » permet d'amplifier l'effet de la portion en forme de U et ainsi de favoriser le débattement du connecteur 32.

Dans le mode de réalisation illustré, comme visible notamment sur la figure 2, la partie intermédiaire de chaque connecteur comporte une première portion 51, ici orientée à la verticale, et qui est disposée à l'arrière du dispositif de connexion 4.

La deuxième patte de connexion 50 s'étend en saillie, vers l'arrière, à partir de la première portion 51. Par exemple, la première portion 51 est tournée voire plaquée contre la face intérieure de la deuxième partie 42 du boîtier 30 du dispositif de connexion 4. La patte de connexion 50 dépasse en saillie à l'arrière de la partie 42 du boîtier 30 par une ouverture ménagée au travers de la partie 42 du boîtier 30. La première portion 51 peut au moins en partie être reçue dans une des rainures 46.

La première partie 51 présente ici une forme de plaque, orientée à la verticale, avec sa plus grande surface plaquée contre la partie 42 du boîtier 30.

La première partie 51 est ici prolongée par la partie 52 (deuxième partie), qui est agencée perpendiculairement avec la première partie 51, c'est-à-dire avec un angle essentiellement égal à 90° ou égal à 90°. La deuxième partie 52 présente ici une forme de plaque, de préférence essentiellement orientée à l'horizontale, avec sa plus grande surface tournée contre la face intérieure de la première partie 40 du boîtier 30.

La deuxième partie 52, comme expliqué précédemment, est longitudinalement prolongée par la portion coudée additionnelle 54 présentant la section en forme de L.

Par exemple, la portion 54 ayant une section en forme de « L » comporte une forme de plaque 53 disposée verticalement, en s'étendant longitudinalement dans une direction parallèle à la direction longitudinale de la deuxième partie 52, mais avec sa plus grande surface disposée perpendiculairement à la plus grande surface de la deuxième partie 52.

En d'autres termes, le bord latéral de la plaque 53 est parallèle voire en contact avec la face supérieure du boîtier 10 de l'appareil 2.

Comme visible sur les figures 4 et 5, la plaque 53 est de préférence reçue dans le volume 44 délimité dans la première partie 40 du boîtier 30.

De plus, la plaque 53, bien que s'étendant longitudinalement, est décalée latéralement vers l'extérieur de l'appareil par rapport à la direction longitudinale de la deuxième partie 52.

La plaque 53 se termine, du côté tourné vers la face avant de l'appareil 2, par la portion 56 coudée en forme de U. Cette portion 56 est ensuite prolongée longitudinalement par une troisième partie 55 qui s'étend ici vers l'arrière de l'appareil 2, parallèlement à la plaque 53. Par exemple, la troisième partie 55 peut être alignée avec la deuxième portion 52. La troisième partie 55 présente par exemple une forme de plaque, de préférence essentiellement orientée à l'horizontale, avec sa plus grande surface tournée de sorte à faire face à la face intérieure de la première partie 40 du boîtier 30.

La troisième partie 55 est ensuite prolongée par la première patte de connexion 57, qui est agencée perpendiculairement avec la troisième partie 55, c'est-à-dire avec un angle essentiellement égal à 90° ou égal à 90°. La première patte de connexion 57 présente ici une forme de plaque, de préférence essentiellement orientée à la verticale, avec sa plus grande surface essentiellement parallèle à la première partie 40 du boîtier 30 mais en étant placée à distance de la première partie 40 du boîtier 30.

Comme illustré sur la figure 2, la première patte de connexion 57 pénètre à l'intérieur du boîtier 10 de l'appareil 2 par un orifice 60 traversant aménagé sur la face supérieure du boîtier 10 de l'appareil 2.

De nombreux autres modes de réalisation sont possibles.

Dans l'exemple illustré, le dispositif de connexion est monté sur l'appareil électrique.

Par exemple, le dispositif de connexion 4 est fabriqué et vendu séparément de l'appareil électrique et est monté sur l'appareil électrique par un utilisateur.

Selon un autre exemple, le dispositif de connexion 4 est intégré à l'appareil électrique 2, par exemple dès l'origine. Autrement dit, le dispositif de connexion 4 et l'appareil électrique 2 sont vendus conjointement.

Les modes de réalisation et les variantes envisagés ci-dessus peuvent être combinés entre eux pour créer de nouveaux modes de réalisation.

## Revendications

1. Dispositif de connexion (4) pour connecter un appareil électrique (2) à une barre de distribution électrique (6), la barre de distribution comportant une armature (20) comprenant au moins un point de montage (24) pour accrocher l'appareil électrique, la barre de distribution comprenant des terminaux électriques de raccordement (26) étant accessibles au travers d'ouvertures ménagées dans l'armature,
le dispositif de connexion (4) comportant au moins un connecteur électrique (32) et un boîtier (30), chaque connecteur électrique étant solidaire du boîtier, le boîtier étant configuré pour être attaché mécaniquement au point de montage et à l'appareil électrique,
chaque connecteur électrique (32) étant configuré pour être raccordé à un terminal électrique de raccordement (26) de la barre de distribution lorsque le dispositif de connexion est attaché mécaniquement au point de montage (24),
dans lequel chaque connecteur électrique (32) comporte, à une première extrémité, une première patte de connexion (57) configurée pour coopérer avec un terminal de raccordement (12) de l'appareil électrique et, à une deuxième extrémité, une deuxième patte de connexion (50) configurée pour coopérer avec un des terminaux de raccordement (26) de la barre de distribution,
chaque connecteur électrique (32) comportant en outre une portion intermédiaire (51, 52, 53, 54, 55, 56) qui relie la première patte de connexion à la deuxième patte de connexion,
**caractérisé en ce que** la portion intermédiaire de chaque connecteur comporte une portion coudée (56) en forme en U élastiquement déformable, la portion coudée en forme de U étant ouverte vers la deuxième patte de connexion.

2. Dispositif de connexion selon la revendication 1, dans lequel la portion intermédiaire (51, 52, 53, 54, 55, 56) de chaque connecteur comporte en outre une partie (54) avec une section en forme de L qui s'inscrit dans le prolongement d'une des branches de la portion coudée en forme de U.

3. Dispositif de connexion selon la revendication 2, dans lequel la section en forme de L de la partie (54) de la portion intermédiaire (51, 52, 53, 54, 55, 56) est au moins en partie formée par une partie en forme de plaque plane qui s'étend essentiellement perpendiculairement par rapport aux parties immédiatement voisines de la portion intermédiaire (51, 52, 53, 54, 55, 56) auxquelles elle est reliée directement.

4. Dispositif de connexion selon l'une quelconque des revendications précédentes, dans lequel la partie (54) avec une section en forme de L est prolongée, vers la deuxième patte de connexion, par une portion coudée additionnelle (52) qui forme un angle essentiellement égal à 90°.

5. Dispositif de connexion selon l'une quelconque des revendications précédentes, dans lequel le connecteur (32) est réalisé dans un matériau électriquement conducteur, tel qu'un métal ou un alliage métallique.

6. Dispositif de connexion selon l'une quelconque des revendications précédentes, dans lequel le boîtier (30) du dispositif de connexion (4) comporte, sur sa face intérieure, des rainures (46) qui reçoivent au moins une partie des connecteurs électriques.

7. Dispositif de connexion selon l'une quelconque des revendications précédentes, dans lequel le boîtier (30) du dispositif de connexion (4) comporte, sur sa face intérieure, des doigts de fixation (48) qui sont configurés pour coopérer avec des éléments de fixation complémentaires ménagés sur le boîtier (10) de l'appareil électrique.

8. Dispositif de connexion selon la revendication précédente, dans lequel les doigts de fixation (48) sont élastiquement déformables et comportent chacun, à leur extrémité, un crochet configuré pour s'attacher par coopération de forme, notamment par encliquetage, avec un des éléments de fixation complémentaires ménagés sur le boîtier (10) de l'appareil électrique, l'élément de fixation complémentaire ménagé sur le boîtier (10) de l'appareil électrique comportant un orifice ou un rebord.

9. Ensemble (1) comportant un appareil électrique (2) et un dispositif de connexion (4) selon l'une quelconque des revendications précédentes, dans lequel chaque connecteur du dispositif de connexion est raccordé à un terminal de raccordement (12) correspondant de l'appareil électrique.

10. Ensemble (1) selon la revendication précédente, dans lequel le dispositif de connexion est monté sur l'appareil électrique.

11. Ensemble (1) selon la revendication 9, dans lequel le dispositif de connexion est intégré à l'appareil électrique.

## Revendications modifiées

### Revendications modifiées conformément à la règle 137(2) CBE.

1. Dispositif de connexion (4) pour connecter un appareil électrique (2) à une barre de distribution électrique (6), la barre de distribution comportant une armature (20) comprenant au moins un point de montage (24) pour accrocher l'appareil électrique, la barre de distribution comprenant des terminaux électriques de raccordement (26) étant accessibles au travers d'ouvertures ménagées dans l'armature,
le dispositif de connexion (4) comportant au moins un connecteur électrique (32) et un boîtier (30), chaque connecteur électrique étant solidaire du boîtier, le boîtier étant configuré pour être attaché mécaniquement au point de montage et à l'appareil électrique,
chaque connecteur électrique (32) étant configuré pour être raccordé à un terminal électrique de raccordement (26) de la barre de distribution lorsque le dispositif de connexion est attaché mécaniquement au point de montage (24),
dans lequel chaque connecteur électrique (32) comporte, à une première extrémité, une première patte de connexion (57) configurée pour coopérer avec un terminal de raccordement (12) de l'appareil électrique et, à une deuxième extrémité, une deuxième patte de connexion (50) configurée pour coopérer avec un des terminaux de raccordement (26) de la barre de distribution,
chaque connecteur électrique (32) comportant en outre une portion intermédiaire (51, 52, 53, 54, 55, 56) qui relie la première patte de connexion à la deuxième patte de connexion,
**caractérisé en ce que** la portion intermédiaire de chaque connecteur comporte une portion coudée (56) en forme en U élastiquement déformable, la portion coudée en forme de U étant ouverte vers la deuxième patte de connexion, et **en ce que** la deuxième patte de connexion (50) du connecteur électrique (32) est adaptée pour se déplacer avec un débattement latéral grâce à la portion coudée avec forme en U.

2. Dispositif de connexion selon la revendication 1, dans lequel la portion intermédiaire (51, 52, 53, 54, 55, 56) de chaque connecteur comporte en outre une partie (54) avec une section en forme de L qui s'inscrit dans le prolongement d'une des branches de la portion coudée en forme de U.

3. Dispositif de connexion selon la revendication 2, dans lequel la section en forme de L de la partie (54) de la portion intermédiaire (51, 52, 53, 54, 55, 56) est au moins en partie formée par une partie en forme de plaque plane qui s'étend essentiellement perpendiculairement par rapport aux parties immédiatement voisines de la portion intermédiaire (51, 52, 53, 54, 55, 56) auxquelles elle est reliée directement.

4. Dispositif de connexion selon l'une quelconque des revendications précédentes, dans lequel la partie (54) avec une section en forme de L est prolongée, vers la deuxième patte de connexion, par une portion coudée additionnelle (52) qui forme un angle essentiellement égal à 90°.

5. Dispositif de connexion selon l'une quelconque des revendications précédentes, dans lequel le connecteur (32) est réalisé dans un matériau électriquement conducteur, tel qu'un métal ou un alliage métallique.

6. Dispositif de connexion selon l'une quelconque des revendications précédentes, dans lequel le boîtier (30) du dispositif de connexion (4) comporte, sur sa face intérieure, des rainures (46) qui reçoivent au moins une partie des connecteurs électriques.

7. Dispositif de connexion selon l'une quelconque des revendications précédentes, dans lequel le boîtier (30) du dispositif de connexion (4) comporte, sur sa face intérieure, des doigts de fixation (48) qui sont configurés pour coopérer avec des éléments de fixation complémentaires ménagés sur le boîtier (10) de l'appareil électrique.

8. Dispositif de connexion selon la revendication précédente, dans lequel les doigts de fixation (48) sont élastiquement déformables et comportent chacun, à leur extrémité, un crochet configuré pour s'attacher par coopération de forme, notamment par encliquetage, avec un des éléments de fixation complémentaires ménagés sur le boîtier (10) de l'appareil électrique, l'élément de fixation complémentaire ménagé sur le boîtier (10) de l'appareil électrique comportant un orifice ou un rebord.

9. Ensemble (1) comportant un appareil électrique (2) et un dispositif de connexion (4) selon l'une quelconque des revendications précédentes, dans lequel chaque connecteur du dispositif de connexion est raccordé à un terminal de raccordement (12) correspondant de l'appareil électrique.

10. Ensemble (1) selon la revendication précédente, dans lequel le dispositif de connexion est monté sur l'appareil électrique.

11. Ensemble (1) selon la revendication 9, dans lequel le dispositif de connexion est intégré à l'appareil électrique.
